# EUROPÄISCHE PATENTSCHRIFT

(11) **EP 2 511 553 B1**
(45) Veröffentlichungstag und Bekanntmachung des Hinweises auf die Patenterteilung: **14.10.2015**
(21) Anmeldenummer: 12160033.2
(22) Anmeldetag: 19.03.2012
(51) Int. Cl.: F16D 1/068, F16H 57/00, F04C 15/00

(54) **Zahnradwellenanordnung**
Gear wheel shaft assembly
Agencement d'arbre-pignon

(30) Priorität: 12.04.2011 DE 102011016810
(43) Veröffentlichungstag der Anmeldung: 17.10.2012
(73) Patentinhaber: Robert Bosch GmbH, 70442 Stuttgart (DE)
(72) Erfinder: Stahl, Markus, 90592 Schwarzenbruck (DE); Bredenfeld, Guido, 71672 Marbach (DE)
(74) Vertreter: Thürer, Andreas

(56) Entgegenhaltungen:
- WO-A1-93/16302
- DE-A1- 19 609 430
- DE-A1-102007 009 779
- DE-A1-102008 038 766
- DE-A1-102008 064 267
- JP-A- 57 161 363

## Beschreibung

Die Erfindung bezieht sich auf eine Zahnradmaschine mit einem Gehäuse, mit einer Welle, die eine zylindrische Mantelfläche aufweist, auf der die Welle umschließend ein Außenzahnrad drehfest angeordnet ist, über die das Außenzahnrad drehbar im Gehäuse gelagert ist und die aus dem Gehäuse heraus nach außen geführt ist, und mit einem Drehmomentübertragungsteil, das koaxial mit dem einen, aus dem Gehäuse herausragenden Ende der Welle drehfest und axialfest verbunden ist. Siehe zum Beispiel die DE-A- 10 2008 038 766.

Bei derartige Zahnradmaschinen übernehmen zwei Zahnräder die Förderung eines Fluids (Außenzahnradpumpen oder Innenzahnradpumpen) oder werden durch zugeführtes Fluid angetrieben (Außenzahnradmotoren oder Innenzahnradmotoren).

Bei Zahnradmaschine der eingangs genannten Art ist es bekannt, die Welle und das Drehmomentübertragungsteil durch eine verzahnte Steckverbindung zur Übertragung des vorgesehenen Drehmoments miteinander zu verbinden und zusammen die beiden Teile durch eine Axialsicherung gegen axiales Lösen voneinander zu sichern.

Damit diese beiden Teile in exakter koaxialer Lage miteinander verbindbar sind, ist eine hochgenaue und damit teure Fertigung der Verzahnungen erforderlich.

Für das Drehmomentübertragungsteil, an das ein Drehantrieb zum Antreiben der Welle oder zur Abnahme eines Drehmoments angeschlossen wird, werden bei ansonsten gleicher Ausbildung von Welle und Außenzahnrad unterschiedliche Ausbildungen benötigt. Aufgabe der Erfindung ist es daher, eine Zahnradmaschine der eingangs genannten Art zu schaffen, die bei für die vorgesehenen Drehmomentbelastungen geeigneter Festigkeit und Variabilität des Drehmomentübertragungsteils einen einfachen Aufbau aufweist und kostengünstig herstellbar ist.

Diese Aufgabe wird erfindungsgemäß dadurch gelöst, dass die Welle an ihrem einen Ende eine Koaxialbohrung und das Drehmomentübertragungsteil an seinem einen Ende einen Koaxialzapfen entsprechenden Durchmessers aufweist, der zentriert geführt in die Koaxialbohrung eingesetzt und durch stoffschlüssiges Fügen mit der Welle verbunden ist.

Der Koaxialzapfen und die Koaxialbohrung sind auf einfache Weise mit einer hohen Genauigkeit und damit kostengünstig herstellbar. Durch eine ausreichende Länge des Koaxialzapfens wird auch eine hohe Koaxialität des Drehmomentübertragungsteils zur Welle sicher gestellt.

Das anschließende stoffschlüssige Verbinden von Welle und Drehmomentübertragungsteil führt nicht nur zu der erforderlichen Festigkeit der Verbindung zum Übertragen der vorgesehenen Belastungen sondern sorgt auch für eine feste axiale Verbindung der Teile.

Damit kann auf eine separate Axialsicherung verzichtet werden.

Gleichzeitig erlaubt die Ausbildung des Drehmomentübertragungsteils als separates Bauteil die Verwendung unterschiedlicher Drehmomentübertragungsteile bei ansonsten identischen Wellen. Dies führt ebenfalls zu einer Kostenreduzierung.

Eine Koaxialität besonders hoher Qualität wird dadurch erreicht, dass der Koaxialzapfen mit Passung in die Koaxialbohrung eingesetzt ist.

Der Koaxialzapfen kann durch Schweißen insbesondere durch Laserschweißen oder Reibschweißen mit der Welle verbunden sein.

Es ist aber auch möglich, dass der Koaxialzapfen durch Löten oder Kleben mit der Welle verbunden ist.

Die Koaxialbohrung kann eine Grundbohrung mit einer größeren Länge als der Länge des Koaxialzapfens sein.

Weist dabei das Drehmomentübertragungsteil einen radial hervorstehenden Axialanschlag auf, der bei in die Koaxialbohrung eingesetztem Koaxialzapfen an einem stirnseitigen Axialgegenanschlag der Welle in Anlage ist, erfolgt auf einfache Weise eine genaue axiale Positionierung von Welle und Drehmomentübertragungsteil zueinander bei der Montage.

Das Drehmomentübertragungsteil kann eine Kegelwelle oder eine Zylinderwelle oder eine Vierkantwelle oder eine Zahnwelle sein.

Das Außenzahnrad kann insbesondere eine evolventische Geradverzahnung oder eine Schrägverzahnung aufweisen.

Ein Ausführungsbeispiel der Erfindung ist in der Zeichnung dargestellt und wird im Folgenden näher beschrieben. Es zeigen
- Fig. 1: einen Längsschnitt einer Außenzahnradmaschine
- Fig. 2: einen Längsschnitt einer Zahnradwellenanordnung der Außenzahnradmaschine nach Fig. 1.

Der dargestellte Außenzahnradmotor besitzt ein Gehäuse 1 mit einem Innenraum 2, der durch zwei an einander gegenüberliegenden Enden des Gehäuses 1 anliegenden und befestigten Deckeln 3 und 4 begrenzt ist.

Im Innenraum 2 sind zwei im Außeneingriff miteinander kämmende Außenzahnräder 5 und 6 angeordnet.

Das abtreibende Außenzahnrad 5 ist mit einer eine Abtriebswelle bildenden Welle 7 drehfest verbunden, über die es über je eine Lagerschale 8 und 9 in zwei Lagerbuchsen 10 und 11 im Gehäuse 1 drehbar gelagert ist.

Es versteht sich, dass Welle 7 und Zahnrad 5 auch einteilig ausgebildet sein können.

Die Welle 7 ist auf der Abtriebsseite durch den Deckel 4 nach außen geführt und über eine Wellendichtung 12 abgedichtet.

An dem aus dem Deckel 4 herausragenden Ende ist die Welle 7 mit einer koaxialen Kegelwelle fest verbunden, die ein Drehmomentübertragungsteil 13 bildet.

Welle 7, Außenzahnrad 5 und Drehmomentübertragungsteil 13 bilden eine Zahnradwellenanordnung.

Das Außenzahnrad 6 ist mit einer Achse 14 drehfest verbunden, über die es über je eine Lagerschale 15 und 16 in zwei Lagerbuchsen 17 und 18 im Gehäuse 1 drehbar gelagert ist.

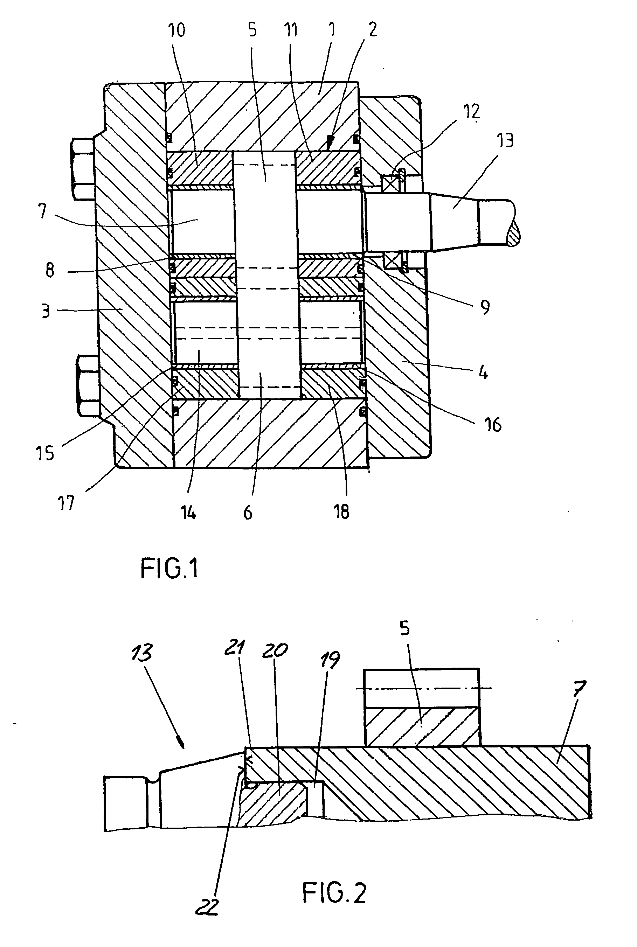

Wie in Figur 2 zu sehen ist, weist die Welle 7 eine als Grundbohrung ausgebildete Koaxialbohrung 19 auf.

In die Koaxialbohrung 19 ist ein Koaxialzapfen 20 geringerer Länge als der Länge der Koaxialbohrung 19 mit Passung eingesetzt.

Der Koaxialzapfen 20 ist an dem einen Ende des Drehmomentübertragungsteils 13 ausgebildet und erstreckt sich von diesem freien Ende bis zu einer radial umlaufenden Schulter 21 größeren Durchmessers als dem Durchmesser des Koaxialzapfens 20.

Die Schulter 21 bildet einen Axialanschlag, der bei in die Koaxialbohrung 19 eingesetztem Koaxialzapfen 20 an der einen Axialgegenanschlag bildenden einen Stirnseite 22 des Drehmomentübertragungsteils 13 in Anlage ist und die Einschubbewegung begrenzt.

Nach dem Einsetzen des Koaxialzapfens 20 wurde dieser an seiner radial umlaufenden Mantelfläche z.B. durch Reibschweißen oder durch Laserschweißen stoffschlüssig mit der radial umlaufenden Wandung der Koaxialbohrung 19 der Welle 7 verbunden.

### Bezugszeichenliste

- 1: Gehäuse
- 2: Innenraum
- 3: Deckel
- 4: Deckel
- 5: Außenzahnrad
- 6: Außenzahnrad
- 7: Welle
- 8: Lagerschale
- 9: Lagerschale
- 10: Lagerbuchse
- 11: Lagerbuchse
- 12: Wellendichtung
- 13: Drehmomentübertragungsteil
- 14: Achse
- 15: Lagerschale
- 16: Lagerschale
- 17: Lagerbuchse
- 18: Lagerbuchse
- 19: Koaxialbohrung
- 20: Koaxialzapfen
- 21: Schulter
- 22: Stirnseite

## Patentansprüche

1. Zahnradmaschine mit einem Gehäuse (1), mit einer Welle (7), die eine zylindrische Mantelfläche aufweist, auf der die Welle umschließend ein Außenzahnrad (5) drehfest angeordnet ist, über die das Außenzahnrad (5) drehbar im Gehäuse (1) gelagert ist und die aus dem Gehäuse (1) heraus nach außen geführt ist, und mit einem Drehmomentübertragungsteil, das koaxial mit dem einen, aus dem Gehäuse (1) herausragenden Ende der Welle drehfest und axialfest verbunden ist,
**dadurch gekennzeichnet,**
**dass** die Welle (7) an ihrem einen Ende eine Koaxialbohrung (19) und das Drehmomentübertragungsteil (13) an seinem einen Ende einen Koaxialzapfen (20) entsprechenden Durchmessers aufweist, der zentriert geführt in die Koaxialbohrung (19) eingesetzt und durch stoffschlüssiges Fügen mit der Welle (7) verbunden ist.

2. Zahnradmaschine nach Anspruch 1, **dadurch gekennzeichnet, dass** der Koaxialzapfen (20) mit Passung in die Koaxialbohrung (19) eingesetzt ist.

3. Zahnradmaschine nach einem der Ansprüche 1 und 2, **dadurch gekennzeichnet, dass** der Koaxialzapfen (20) durch Schweißen mit der Welle (7) verbunden ist.

4. Zahnradmaschine nach Anspruch 3, **dadurch gekennzeichnet, dass** der Koaxialzapfen (20) durch Laserschweißen oder Reibschweißen mit der Welle (7) verbunden ist.

5. Zahnradmaschine nach Anspruch 3, **dadurch gekennzeichnet, dass** der Koaxialzapfen (20) durch Löten oder Kleben mit der Welle verbunden ist.

6. Zahnradmaschine nach einem der vorhergehenden Ansprüche, **dadurch gekennzeichnet, dass** die Koaxialbohrung (19) eine Grundbohrung mit einer größeren Länge als der Länge des Koaxialzapfens (20) ist.

7. Zahnradmaschine nach Anspruch 6, **dadurch gekennzeichnet, dass** das Drehmomentübertragungsteil (13) einen radial hervorstehenden Axialanschlag aufweist, der bei in die Koaxialbohrung (19) eingesetztem Koaxialzapfen (20) an einem stirnseitigen Axialgegenanschlag der Welle (7) in Anlage ist.

8. Zahnradmaschine nach einem der vorhergehenden Ansprüche, **dadurch gekennzeichnet, dass** Welle und Außenzahnrad ein einteiliges Bauteil sind.

9. Zahnradmaschine nach einem der vorhergehenden Ansprüche, **dadurch gekennzeichnet, dass** das Außenzahnrad (5) eine Geradverzahnung oder eine Schrägverzahnung aufweist.

10. Zahnradmaschine nach einem der vorhergehenden Ansprüche, **dadurch gekennzeichnet, dass** sie eine Außenzahnradmaschine oder eine Innenzahnradmaschine ist.

## Claims

1. Gear machine having a housing (1), having a shaft (7) which has a cylindrical circumferential face, on which an external gearwheel (5) is arranged fixedly so as to rotate with it and so as to enclose the shaft, via which the external gearwheel (5) is mounted rotatably in the housing (1) and which is guided out of the housing (1) to the outside, and having a torque transmission part which is connected in a coaxial, axially fixed and fixed manner to that end of the shaft which protrudes out of the housing (1) so as to rotate with it, **characterized in that** the shaft (7) has a coaxial bore (19) at its one end and the torque transmission part (13) has a coaxial journal (20) of corresponding diameter at its one end, which coaxial journal (20) is inserted into the coaxial bore (19) in a centred guided manner and is connected to the shaft (7) by way of integral joining.

2. Gear machine according to Claim 1, **characterized in that** the coaxial journal (20) is inserted with a locating fit into the coaxial bore (19).

3. Gear machine according to either of Claims 1 and 2, **characterized in that** the coaxial journal (20) is connected to the shaft (7) by way of welding.

4. Gear machine according to Claim 3, **characterized in that** the coaxial journal (20) is connected to the shaft (7) by way of laser welding or rotary friction welding.

5. Gear machine according to Claim 3, **characterized in that** the coaxial journal (20) is connected to the shaft by way of brazing or adhesive bonding.

6. Gear machine according to one of the preceding claims, **characterized in that** the coaxial bore (19) is a blind bore with a greater length than the length of the coaxial journal (20).

7. Gear machine according to Claim 6, **characterized in that** the torque transmission part (13) has a radially projecting axial stop which is in contact with an end-side axial counterstop of the shaft (7) when the coaxial journal (20) is inserted into the coaxial bore (19).

8. Gear machine according to one of the preceding claims, **characterized in that** the shaft and the external gearwheel are a single-piece component.

9. Gear machine according to one of the preceding claims, **characterized in that** the external gearwheel (5) has a spur toothing system or a helical toothing system.

10. Gear machine according to one of the preceding claims, **characterized in that** it is an external gear machine or an internal gear machine.

## Revendications

1. Machine à roues dentées comprenant un boîtier (1), un arbre (7) qui présente une surface d'enveloppe cylindrique, sur laquelle est disposée de manière solidaire en rotation une roue dentée extérieure (5) entourant l'arbre, par le biais duquel la roue dentée extérieure (5) est supportée de manière rotative dans le boîtier (1) et qui est guidé vers l'extérieur hors du boîtier (1), et une partie de transmission de couple qui est connectée coaxialement, de manière solidaire en rotation et fixée axialement, à l'une des extrémités de l'arbre faisant saillie hors du boîtier (1),
**caractérisée en ce que**
l'arbre (7) présente au niveau de l'une de ses extrémités un alésage coaxial (19) et la partie de transmission de couple (13) présente au niveau de l'une de ses extrémités un tourillon coaxial (20) de diamètre correspondant, qui est inséré par guidage de manière centrée dans l'alésage coaxial (19) et qui est connecté à l'arbre (7) par assemblage par liaison de matière.

2. Machine à roues dentées selon la revendication 1, **caractérisée en ce que** le tourillon coaxial (20) est inséré avec ajustement dans l'alésage coaxial (19).

3. Machine à roues dentées selon l'une quelconque des revendications 1 et 2, **caractérisée en ce que** le tourillon coaxial (20) est connecté à l'arbre (7) par soudage.

4. Machine à roues dentées selon la revendication 3, **caractérisée en ce que** le tourillon coaxial (20) est connecté à l'arbre (7) par soudage laser ou par soudage par friction.

5. Machine à roues dentées selon la revendication 3, **caractérisée en ce que** le tourillon coaxial (20) est connecté à l'arbre par brasage ou collage.

6. Machine à roues dentées selon l'une quelconque des revendications précédentes, **caractérisée en ce que** l'alésage coaxial (19) est un alésage borgne ayant une plus grande longueur que la longueur du tourillon coaxial (20).

7. Machine à roues dentées selon la revendication 6, **caractérisée en ce que** la partie de transmission de couple (13) présente une butée axiale saillant radialement qui, lorsque le tourillon coaxial (20) est inséré dans l'alésage coaxial (19), est en appui contre une butée axiale conjuguée frontale de l'arbre (7).

8. Machine à roues dentées selon l'une quelconque des revendications précédentes, **caractérisée en ce que** l'arbre et la roue dentée extérieure constituent un composant d'une seule pièce.

9. Machine à roues dentées selon l'une quelconque des revendications précédentes, **caractérisée en ce que** la roue dentée extérieure (5) présente une denture droite ou une denture oblique.

10. Machine à roues dentées selon l'une quelconque des revendications précédentes, **caractérisée en ce qu'**il s'agit d'une machine à roues dentées extérieures ou d'une machine à roues dentées intérieures.
